Europäisches Patentamt

European Patent Office

Office européen des brevets

(19)

(11) Publication number: **0 112 838**
**B1**

# EUROPEAN PATENT SPECIFICATION

(12)

(45) Date of publication of the patent specification:
02.07.86

(21) Application number: 83900564.2

(22) Date of filing: 24.01.83

(86) International application number:
PCT/FI 83/00004

(87) International publication number:
WO 83/02655 (04.08.83 Gazette 83/18)

(51) Int. Cl.⁴: **F 16 L  3/10**

(54) **PIPE CLAMP.**

(30) Priority: 27.01.82 FI 820271

(43) Date of publication of application:
11.07.84 Bulletin 84/28

(45) Publication of the grant of the patent:
02.07.86 Bulletin 86/27

(84) Designated Contracting States:
DE FR GB SE

(56) References cited:
EP-A-0 029 314
DE-A-2 517 745
DE-B-2 618 900
US-A-2 294 904
US-A-2 404 531

(73) Proprietor: GS- HYDRO- OY, Köyhänmäentie, SF-
01510 Vantaa (FI)

(72) Inventor: Sundholm, Göran, Metsontie 1 A 12, SF-
04320 Riihikallio (FI)

(74) Representative: Selting, Günther, Dipl.- Ing.,
Deichmannhaus am Hauptbahnhof, D-5000 Köln 1
(DE)

## Description

The present invention relates to a pipe clamp, especially for holding pipes under high pressure, having two preferably symmetrical clamping jaws provided with bores for means for fastening the clamp to a base plate, and a support plate arranged on the upper clamping jaw and held against the clamping jaw by said fastening means.

Such a pipe clamp as known from DE-A-25 17 174 includes two symmetrical clamping jaws. Each clamping jaw is made of an elastomer and is backed with a support plate made of metal. The clamping jaws grip around a pipe to be held and they are fastened on a base plate by means of screws or bolts which extend through bores in the clamping jaws. The bores are provided with cylindrical sleeves of metal which are in contact with both the screw or bolt and the support plate. The sleeves prevent the clamping jaws from destruction when they are pressed together for fastening the pipe clamp on a base plate. Although the known pipe clamp absorbs vibrations of the pipe, it cannot absorb vibrations caused by the base plate since the base plate, the support plate, the sleeves and the bolts are all in direct contact with each other.

In another pipe clamp known from practice, the clamping jaws are made of thermosetting plastics and the outer ends of the bores are provided with recesses which are, with respect to the lower clamping jaw, intended for receiving centering pins provided in the base plate, each pin having a threaded bore for the fastening means. For manufacturing reasons, a similar upper clamping jaw is used, the recess in the respective bore whereof may serve for receiving the head of the fastening bolt. Alternatively, the support plate is often arranged on the upper clamping jaw, in which case the heads of the clamping bolts abut against the support plate and the recesses are left empty.

A substantial disadvantage associated with pipe clamps of this kind is that they extremely well transmit disturbing noises, in particular caused by hydraulic pumps, directly to the base plate on which they are fastened. This is especially disturbing when the base plate is made of metal, for example, a ship's hull or an oil drilling rig, but also many other fixed base plates, such as concrete, transmit sound to such an extent that considerable inconvenience occurs. Another disadvantage is that the pipes, because of thermal expansion movements, gradually tend to loosen in the clamping jaws.

The object of the present invention is to provide a pipe clamp in accordance with the preamble of claim 1, which does not transmit disturbing noises and vibration tending to loosen the pipe clamp.

The pipe clamp according to the invention is characterized in that a plate of an elastic material dampening sound waves is arranged between the lower clamping jaw and the base and between the upper clamping jaw and the support plate, respectively, and that sleeves of a similar material are arranged in recesses provided in the outer ends of the bores of the clamping jaws in order to center the fastening means in the bores out of contact with the clamping jaws.

Thus, in the pipe clamp the clamping jaws holding the pipe are not at all in direct contact with the base plate. What is essential in this connection is that no change has to be made in already existing clamping jaws which, due to being mass produced standard parts, are inexpensive in price. Another advantage resides in that thermal expansion movements are taken up by the same sound insulation due to which the grip of the clamping jaws around the pipe is not impaired.

Preferred embodiments of the sound insulation are presented in claims 2 and 3 and will also be described in more detail with reference to the accompanying drawing.

Of special interest is considered the use of the invention for anchoring pipes. Anchorings which are secure per se are commonly known but all suffer from the disadvantage of lacking sound insulation. A secure anchoring combined with a good sound insulation is achieved by placing two pipe clamps according to the invention, while utilizing existing standard clamping jaws, adjacent to each other along the pipe to be anchored and by arranging on each side outside the double pipe clamp anchoring means known per se, for example, two ring halves fastened around the pipe by means of bolts.

In the drawing

Figure 1 shows one embodiment of a pipe clamp according to the invention, partially in section, as seen in the direction of the pipe,

Figure 2 is a side view of the same embodiment,

Figures 3 and 4 illustrate two alternative detail embodiments of the upper sound insulation,

Figures 5 and 6 illustrate further alternative embodiments of the sound insulation, and

Figure 7 and 8 illustrate the application of the invention to the anchoring of a pipe.

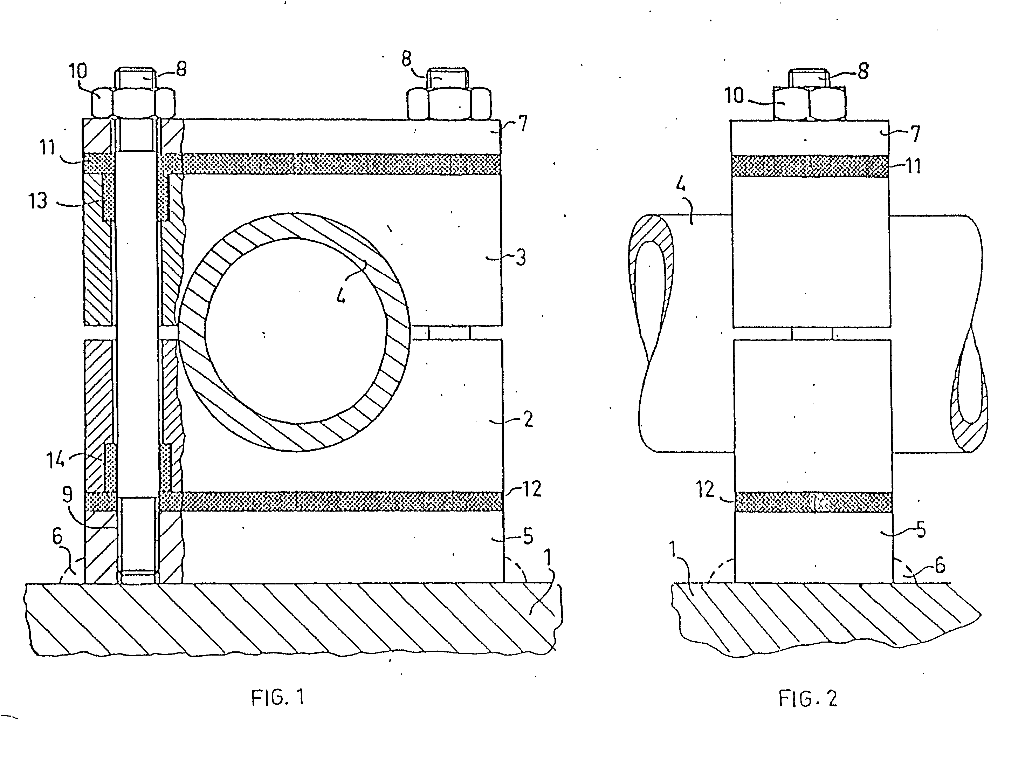

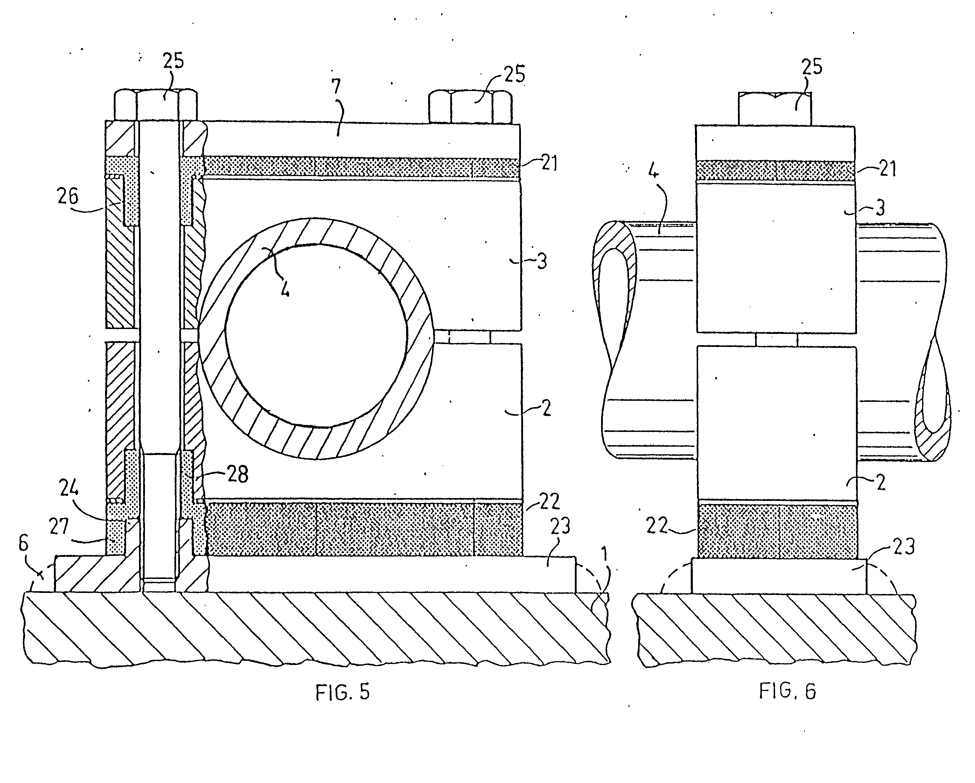

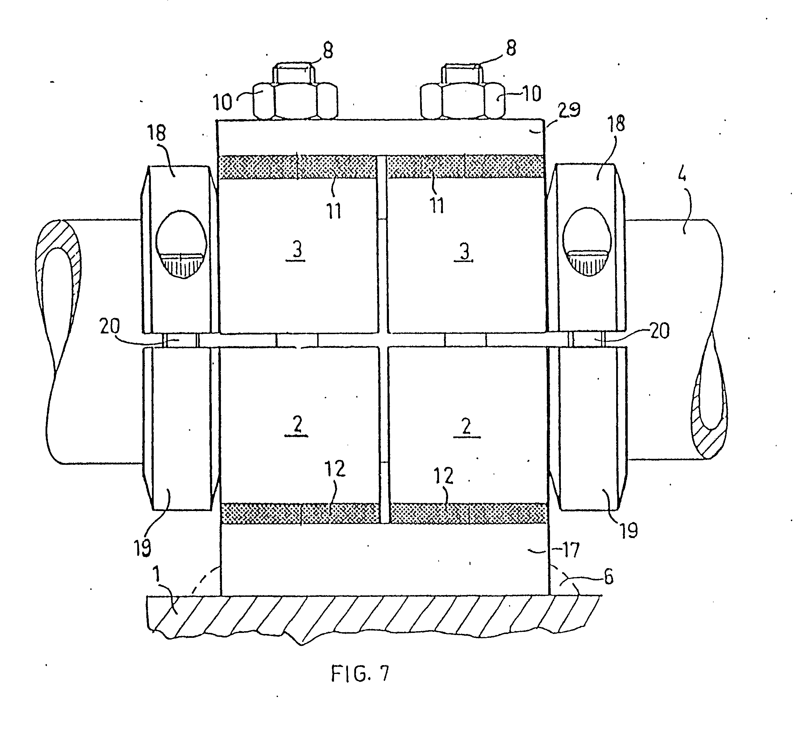

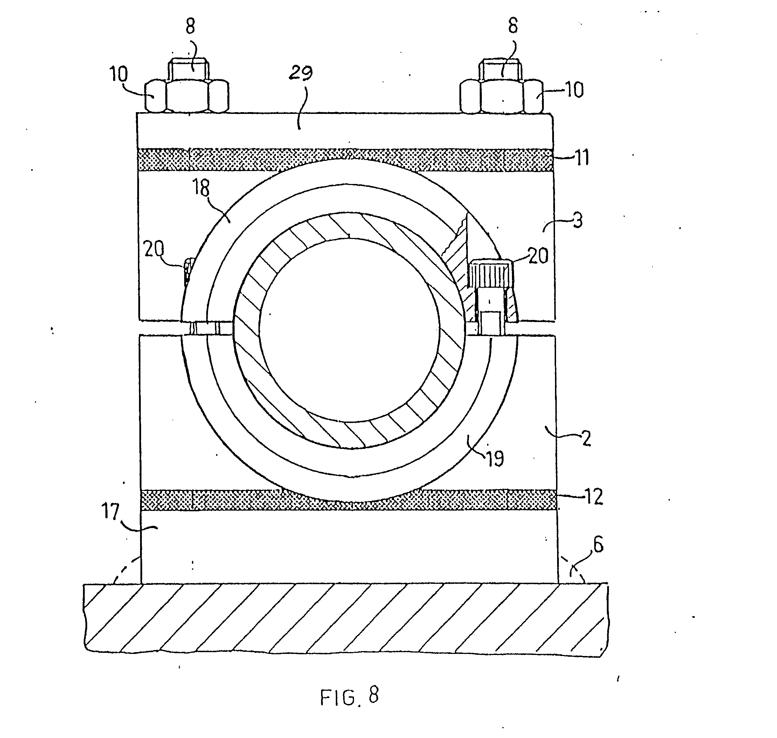

A base, on which the pipe clamp is fastened, is denoted by the reference numeral 1. Preferably identical clamping jaws 2 and 3 of thermosetting plastics directly grip around a high-pressure pipe 4. On the base 1 is fastened a plate 5 (Figures 1 and 2), 23 (Figures 5 and 6) and 17 (Figures 7 and 8), respectively, by means of weld seams 6. These plates are provided with threaded bores, of which only one, in Figure 1, is denoted by the reference numeral 9, for fastening means which, according to Figures 1 to 4 and 7 and 8, comprise a threaded pin 8 with an upper nut 10 screwed thereon and which, in Figures 5 and 6, comprise bolts 25. The plate 23 according to Figures 5 and 6 represents a commonly existing type provided with centering pins 24. Also an upper support plate 7 according to Figures 1 to 6 is previously known per se.

Known pipe clamps have consisted of the parts mentioned above. The clamping jaws 2 and 3 have been provided with recesses at the outer ends of the bores for the fastening means, with the intention of achieving an easy fit on the pins 24.

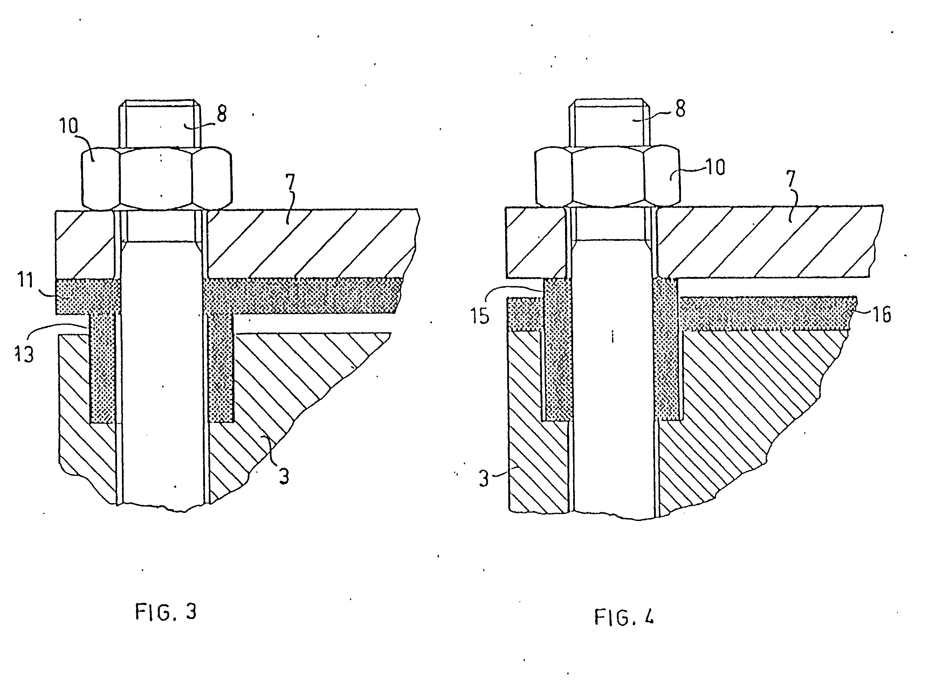

However, known pipe clamps assembled of the above mentioned parts involve the disadvantage that sound waves in the pipe 4 are directly propagated to the base 1. According to the present invention, this disadvantage is eliminated by arranging, on one hand, between the lower clamping jaw 2 and the base plate 5 and 23, respectively, (Figures 1, 2 and 5, 6) a plate 12 and 22, respectively, of a sound insulating material and by arranging, on the other hand, between the upper clamping jaw 3 and the support plate 7 a similar plate 11 and 21, respectively. In order to prevent propagation of the sound waves from the clamping jaws 2 and 3 through the fastening bolts 25 and the pins 8, respectively, sleeves of the same sound insulating material are arranged in the bore recesses of the clamping jaws. Said sleeves may comprise separate parts 13, 14 and 15 (Figures 1, 3 and 4) or, alternatively, be made in one piece with the respective intermediate plates, reference numerals 26, 28 (Figure 5). As best seen in Figures 3 and 4, the sleeves fitted into the bores in the clamping jaws do not, in the untightened condition of the pipe clamp, completely fill the recesses but a certain play is present in relation to the tightening pin 8. When the nut 10 is tightened, the sleeves 13 and 15, respectively, are pressed together so that they first fill the recess in the bore whereafter they are pressed against the pin 8 and automatically center this pin in the bore of the clamping jaws so that no contact exists directly between the pin 8 and the clamping jaws. The same applies to the sleeve 14 according to Figure 1 and the sleeve 28 according to Figure 5.

In the embodiments according to Figure 1, 3 and 4, the intermediate plates 11, 12 and 16 and the sleeves 13, 14 and 15, respectively, comprise separate parts. The alternative embodiments of the sleeve 13 and the sleeve 15, respectively, in relation to the upper intermediate plate 11 and 16, respectively, shown in Figure 3 and 4 can, of cource, be applied also to the sleeves 14 and 12, respectively, at the bottom of Figure 1.

The embodiment according to Figures 5 and 6, illustrated in detail in Figure 5, has the advantage of an easier mounting owing to the cooperation between the centering pins 24 of the base plate 23 and the correspondingly formed sleeve parts 27 in the plate 22. The sleeve part 28 corresponds functionally to the sleeve 14 in Figure 1. As compared to the embodiment according to Figure 1, the embodiment according to Figure 5 has the advantage of being somewhat easier to mount owing to the above described centering action permitting the use of earlier existing tightening bolts 25 as compared to the pin and nut assembly 8, 10 according to Figure 1 (as well as Figures 3 and 4). However, this difference is not decisive.

Figures 7 and 8 illustrate the application of the invention to the anchoring of a pipe 4. Two pipe clamps according to the invention are arranged adjacent each other around the pipe 4, with a common base plate 17 and a common upper support plate 29. On each side of the double clamp are arranged anchoring means, which preferably in each case may comprise two ring halves 18 and 19 which are tightened around the pipe 4 by means of bolts 20. The double clamp gives the anchorage sufficient strength and, at the same time, a good sound insulation is achieved with respect to the base plate 17 and the base 1 in the same way as described earlier.

The horizontal base 1 shown in the drawing may, of course, just as well be a wall or a roof structure.

As also mentioned earlier, both a good sound insulation and a good holding of the pipe are achieved by means of the pipe clamp according to the invention. This is not achieved if, as may seem obvious, a ring of a similar material as in the intermediate plates according to the invention is arranged between the pipe itself and the clamping jaws. When using such a ring, on one hand, a sufficiently good grip around the existing standard pipe clamps specially dimensioned for different pipe sizes cannot be used but new clamping jaws would have to be made or existing ones be machined, which in each case would involve disproportionate additional costs.

**Claims**

1. A pipe clamp, especially for holding a pipe (4) under high pressure, having two preferably symmetrical clamping jaws (2,3) provided with bores for means (8,10) for fastening the clamp to a base plate (5), and a support plate (7) arranged on the upper clamping jaw (3) and held against the clamping jaw (3) by said fastening means (8,10), <u>characterized in</u> that a plate (12,11) of an elastic material dampening sound waves is arranged between the lower clamping jaw (2) and the base plate (5) and between the upper clamping jaw (3) and the support plate (7), respectively, and that sleeves (13,14) of a similar material are arranged in recesses provided in the outer ends of the bores of the clamping jaws (2,3) in order to center the fastening means (8,10) in the bores out of contact with the clamping jaws.

2. A pipe clamp according to claim 1, <u>ccharacterized</u> in that the plate (21) between the upper clamping jaw (3) and the support plate (7) is provided with sleeve parts (26) formed in one piece therewith to be received in the recess of the clamping jaw (3).

3. A pipe clamp according to claim 1 or 2, the base plate (23) being provided with centering pins (24) with a threaded bore for fastening means (25), <u>characterized in</u> that the plate (22) between the lower clamping jaw (2) and the base plate (23) is provided with two sleeve parts (27,28) formed in one piece therewith, one respectively for receiving the corresponding centering pin (24) and the other to be received in the recess of the clamping jaw (2) in the corresponding bore.

4. The use of a pipe clamp according to any of the preceding claims for anchoring a high-pressure pipe to a base plate (17), <u>characterized in</u> that two clamps are arranged adjacent to each other along the pipe (4), with a common base plate (17) and a common upper support plate (29), and that on each side of this double clamp are arranged anchoring means, for example, in the form of ring halves (18,19) tightened around the pipe (4) by means of bolts (20).

## Patentansprüche

1. Rohr-Klemmvorrichtung, insbesondere zum Festhalten eines Rohres (4) unter hohem Druck, mit zwei vorzugsweise symmetrischen Klemmbacken (2,3), die mit Bohrungen für Befestigungsmittel (8,10) zum Befestigen der Klemmvorrichtung an einer Basisplatte (5) versehen sind, und einer auf der oberen Klemmbacke (3) angeordneten und durch die Befestigungsmittel (8,10) gegen die obere Klemmbacke (3) gedrückten Stützplatte (7), <u>dadurch gekennzeichnet</u>, daß zwischen der unteren Klemmbacke (2) und der Basisplatte (5) und zwischen der oberen Klemmbacke (3) und der Stützplatte (7) jeweils eine Platte (12,11) aus einem elastischen, schallwellendämpfenden Material angeordnet ist und daß Buchsen (13,14) aus ähnlichem Material in Ausnehmungen angeordnet sind, die in den äußeren Enden der Bohrungen der Klemmbacken (2,3) vorgesehen sind, um die Befestigungsmittel (8,10) in den Bohrungen berührungsfrei zu den Klemmbacken zu zentrieren.

2. Rohr-Klemmvorrichtung nach Anspruch 1, <u>dadurch gekennzeichnet</u>, daß die Platte (21) zwischen der oberen Klemmbacke (3) und der Stützplatte (7) einstückig angeformte Buchsenteile (26) aufweist, die in die Ausnehmung der Klemmbacke (3) hineinragen.

3. Rohr-Klemmvorrichtung nach Anspruch 1 oder 2, bei der die Basisplatte (23) mit Zentrierstiften (24) mit einer Gewindebohrung für die Befestigungsmittel (25) versehen ist, <u>dadurch gekennzeichnet</u>, daß die Platte (22) zwischen der unteren Klemmbacke (2) und der Basisplatte (23) mit zwei ihr einstückig angeformten Buchsenteilen (27,28) versehen ist, von denen jeweils eines zur Aufnahme des entsprechenden Zentrierstifts (24) dient, während das andere in die Ausnehmung in der entsprechenden Bohrung der Klemmbacke (2) hineinragt.

4. Verwendung einer Rohr-Klemmvorrichtung nach einem der vorhergehenden Ansprüche zur Verankerung eines Hochdruckrohres an einer Basisplatte (17), <u>dadurch gekennzeichnet</u>, daß entlang des Rohres (4) zwei Klemmvorrichtungen einander benachbart angeordnet sind, die eine gemeinsame Basisplatte (17) und eine gemeinsame obere Stützplatte (29) aufweisen, und daß auf jeder Seite dieser Doppel-Klemmvorrichtung Verankerungsmittel, z.B. in der Form von Ringhälften (18,19), die mittels Bolzen (20) um das Rohr (4) herumgespannt sind, angeordnet sind.

## Revendications

1. Collier de fixation pour tuyau, notamment pour maintenir un tuyau (4) sous pression élevée, présentant deux mâchoires de serrage (2, 3) de préférence symétriques et munies de perçages pour des moyens (8, 10) servant à fixer le collier sur une plaque de base (5), et une plaque de support (7) disposée sur la mâchoire supérieure de serrage (3) et maintenue contre la mâchoire de serrage (3) par lesdits moyens de fixation (8, 10), <u>caractérisé</u> en ce qu'une plaque (12, 11) en un matériau élastique amortissant les ondes sonores est disposée entre la mâchoire inférieure de serrage (2) et la plaque de base (5) et entre la mâchoire supérieure de serrage (3) et la plaque de support (7), respectivement, et en ce que des manchons (13, 14) en un matériau analogue sont disposés dans des logements ménagés dans les extrémités extérieures des perçages des mâchoires de serrage (2, 3) afin de centrer les moyens de fixation (8, 10) dans les perçages, hors de contact avec les mâchoires de serrage.

2. Collier de fixation pour tuyau selon la revendication 1, caractérisé en ce que la plaque (21) située entre la mâchoire supérieure de serrage (3) et la plaque de support (7) est munie de parties-manchons (26) réalisées en une pièce avec elle afin d'être reçues dans le logement de la mâchoire de serrage (3).

3. Collier de fixation pour tuyau selon la revendication 1 ou 2, la plaque de base (23) étant munie de plots de centrage (24) présentant un perçage fileté pour les moyens de fixation (25), caractérisé en ce que la plaque (22) située entre la mâchoire inférieure de serrage (2) et la plaque de base (23) est munie de deux parties-manchons (27, 28) réalisées en une pièce avec elle, l'une respectivement pour recevoir le plot de centrage correspondant (24) et l'autre pour être reçue dans le logement de la mâchoire de serrage (2) dans le perçage correspondant.

4. Utilisation d'un collier de fixation pour tuyau selon l'une quelconque des revendications précédentes pour l'ancrage d'un tuyau à haute pression sur une plaque de base (17), caractérisée en ce que deux colliers de fixation sont disposés adjacents l'un à l'autre le long du tuyau (4), avec une plaque commune de base (17) et une plaque supérieure commune de support (29), et en ce que sur chaque côté de ce double collier de fixation sont disposés des moyens d'ancrage, par exemple, sous la forme de moitiés de bague (18, 19) serrées bloquées autour du tuyau (4) au moyen de boulons (20).

FIG. 1

FIG. 2

FIG. 4

FIG. 3

FIG. 5

FIG. 6

0 112 838

FIG. 7

0 112 838

FIG. 8

0 112 838